Europäisches Patentamt

European Patent Office

Office européen des brevets

(11) Publication number: **0 330 154**
**A2**

## (12) EUROPEAN PATENT APPLICATION

(21) Application number: **89103017.3**

(22) Date of filing: **21.02.89**

(51) Int. Cl.⁴: **B60H 1/00**

(30) Priority: **22.02.88 IT 5291388 U**

(43) Date of publication of application:
**30.08.89 Bulletin 89/35**

(84) Designated Contracting States:
**DE ES FR GB IT SE**

(71) Applicant: **BORLETTI CLIMATIZZAZIONE S.r.l.**
**Frazione Masio, 24**
**I-10046 Poirino (Torino)(IT)**

(72) Inventor: **Alimone, Adelio**
**Via Torino, 50**
**I-10144 Pianezza (Torino)(IT)**

(74) Representative: **Buzzi, Franco et al**
**c/o Jacobacci-Casetta & Perani S.p.A. Via**
**Alfieri, 17**
**I-10121 Torino(IT)**

(54) **Device for the simultaneous and differentiated actuation of control doors for motor-vehicle climatisation units.**

(57) A device for the simultaneous and differentiated operation of two pivoted distribution flaps (7, 8) for a motor-vehicle air conditioning unit, in which the angular amplitude of the travel of on e flap (7) between its fully-closed and fully-open positions is greater than that of the other flap (8). The device includes a transmission member (12) which interconnects the two flaps (7, 8), initially keeping them fixed for pivoting together and subsequently enabling one of the two flaps to effect a further angular movement whilst the other is kept stationary in its fully-open position.

FIG_1

EP 0 330 154 A2

# A device for the simultaneous and differentiated operation of control flaps for motor-vehicle air-conditioning units

The present invention relates to motor-vehicle air conditioning units in general.

More particularly, the invention relates to a device for the simultaneous and differentiated actuation of first and second pivoted distribution flaps associated with the respective air ducts of an air-conditioning unit, in which the flaps are movable between a position in which the respective ducts are fully closed and a position in which they are fully open, and in which the angular amplitude of the travel of the first flap between the two positions is greater than that of the second flap.

Known actuating devices of the type specified above usually use cam kinematic mechanisms to achieve the differentiated movement of the two flaps. Such kinematic mechanisms are normally complicated and expensive and are not always very effective.

The object of the present invention is to avoid the above problems and to produce an actuating device of the type defined at the beginning which is simple and cheap to produce and very effective in operation.

In order to achieve this object, the actuating device according to the invention is characterised in that it includes a transmission member which interconnects the two flaps, keeping them fixed for pivoting together during the movement of the second flap from its fully-closed position to its fully-open position, and enabling the first flap to effect a further angular movement towards its fully-open position while keeping the second flap stationary in its fully-open position.

The transmission member is preferably constituted by a resilient toggle comprising two rods which are articulated to each other at one end, and to the first and second flaps respectively at their other ends, the rods being inclined to each other in the position in which the two flaps are completely closed, and resilient means being provided for biasing the rods to the inclined position.

The invention will now be described in detail with reference to the appended drawings, provided purely by way of non-limiting example, in which:

Figure 1 is a schematic vertical section of an operation device according to the invention shown in a first operative configuration,

Figure 2 is a schematic perspective view of the device and,

Figures 3 to 5 are three views similar to Figure 1 with the device in three different and successive operative configurations.

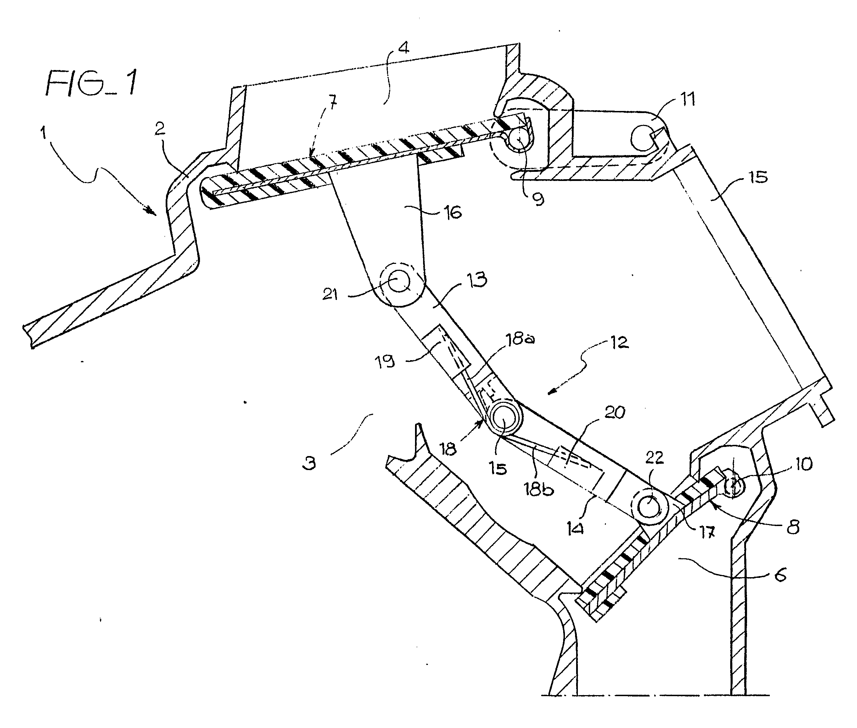

With reference initially to Figure 1, a motor-vehicle air-conditioning unit is generally indicated 1 and includes essentially a body 2 having an air-intake opening 3 and three outlets indicated 4, 5 and 6 respectively. In the embodiment illustrated, the outlet 5 is associated with an air vent fitted in a vehicle in a frontal or lateral position, whilst the outlets 4 and 6 are associated with respective ducts directed towards the base of the windscreen and towards the bottom of the passenger compartment of the car respectively.

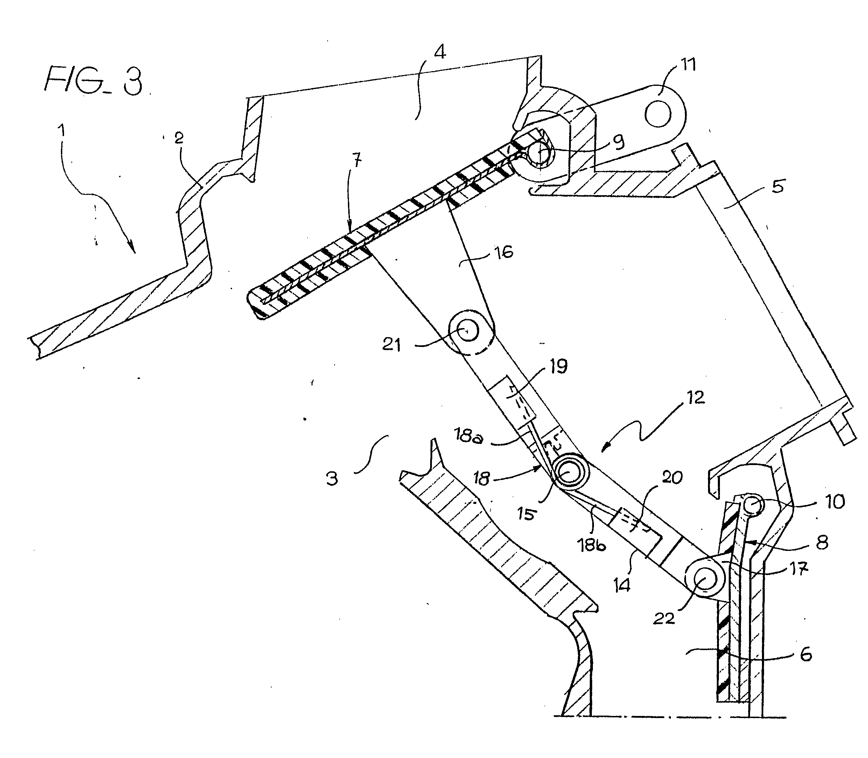

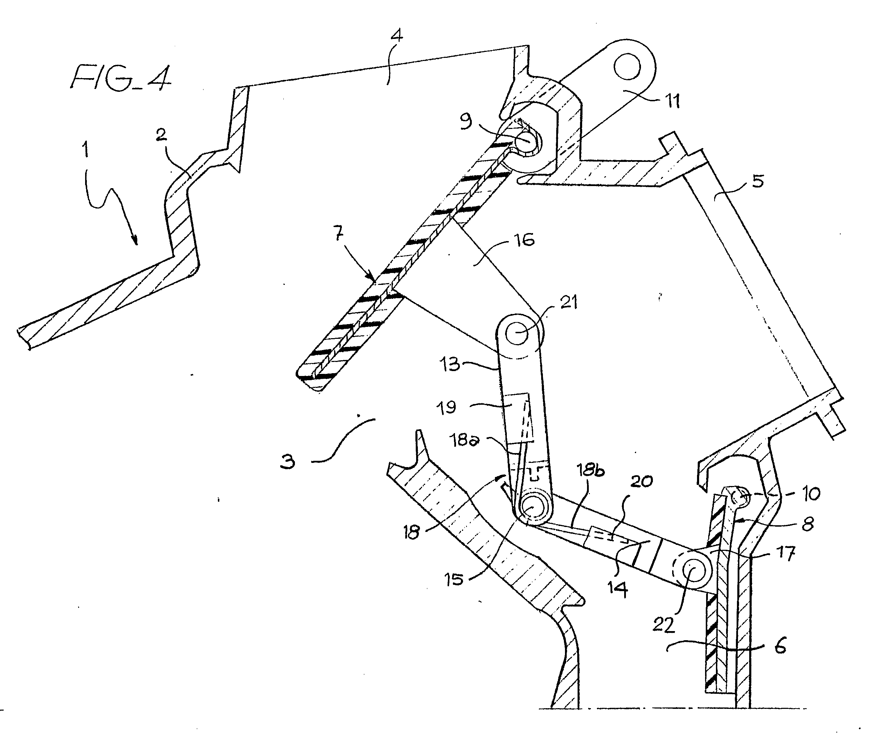

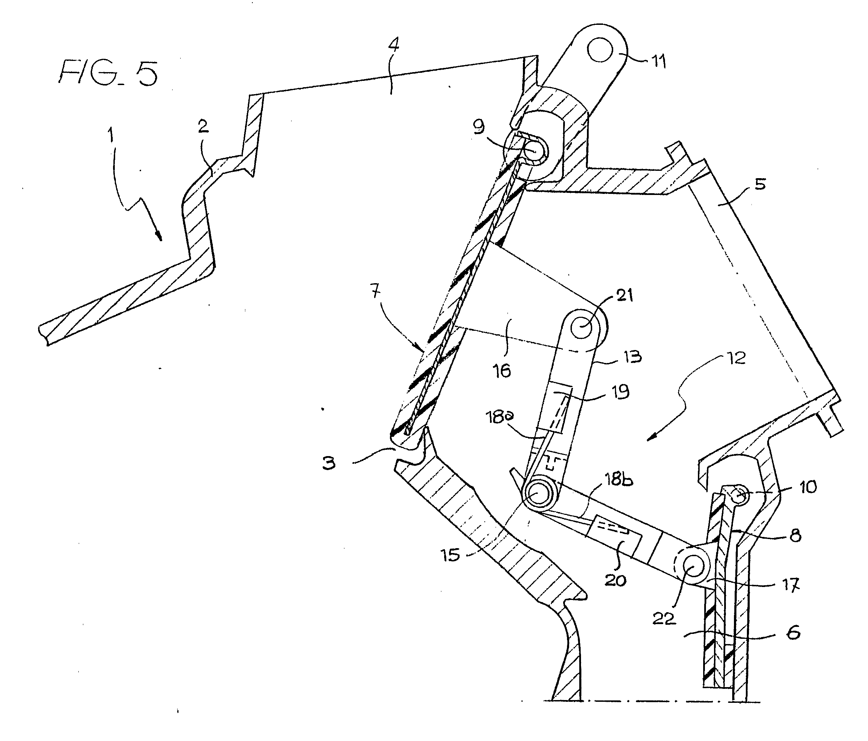

Communication between the intake opening 3 and the outlet openings 4 and 6 is controlled by means of two pivoted flaps indicated 7 and 8 respectively. The two flaps 7 and 8 are each articulated at one end about respective parallel pins 9, 10 carried by the body 2. The flaps 7 and 8 are movable angularly between a position, shown in Figure 1, in which the respective ducts 4 and 6 are completely closed, and in a position, shown in Figure 5, in which the ducts are completely open. Figures 3 and 4 show two intermediate configurations in which the flap 8 is arranged in the fully-open position whilst the flap 7 assumes two successive partially-open positions. It is thus clear that the angular travel of the flap 7 from its fully-closed position to its fully-open position and vice versa is greater than the corresponding angular travel of the flap 8.

The movements of the flaps 7 and 8 between the said positions are effected by means of an actuating member 11 which is operatively associated with the flap 7 and is operable from the exterior, as well as by a transmission member, generally indicated 12, which interconnects the two flaps 7 and 8.

The transmission member 12 is arranged to cause the flap 8 to move differently from the flap 7 in the manner described below.

The transmission member 12 is constituted essentially by a resilient toggle formed by two rods or arms 13, 14 each articulated at one end about a common pin 15 and at their opposite ends to an attachment 16 carried by the flap 7 and to an attachment 17 carried by the flap 8, respectively. The pins for articulating the arm 13 to the attachment 16 and the arm 14 to the attachment 17 are indicated 21 and 22 respectively.

A pin spring, indicated 18, is wound around the pin 15 and its arms 18a, 18b react against respective abutments 19, 20 carried by the arms 13 and 14 respectively.

The arrangement of the transmission member 12 is such that, when the flaps 7 and 8 are in their fully-closed positions shown in Figure 1, the arms 13 and 14 are not aligned but inclined to each other. The spring 18 biasses the arms 13 and 14 towards the inclined position, opposing their relative pivoting towards the configurations shown in Figures 3 and 5.

In operation, when the flaps 7 and 8 are in their fully-closed positions shown in Figure 1, the air which enters the body 2 through the intake 3 is directed entirely towards the outlet 5.

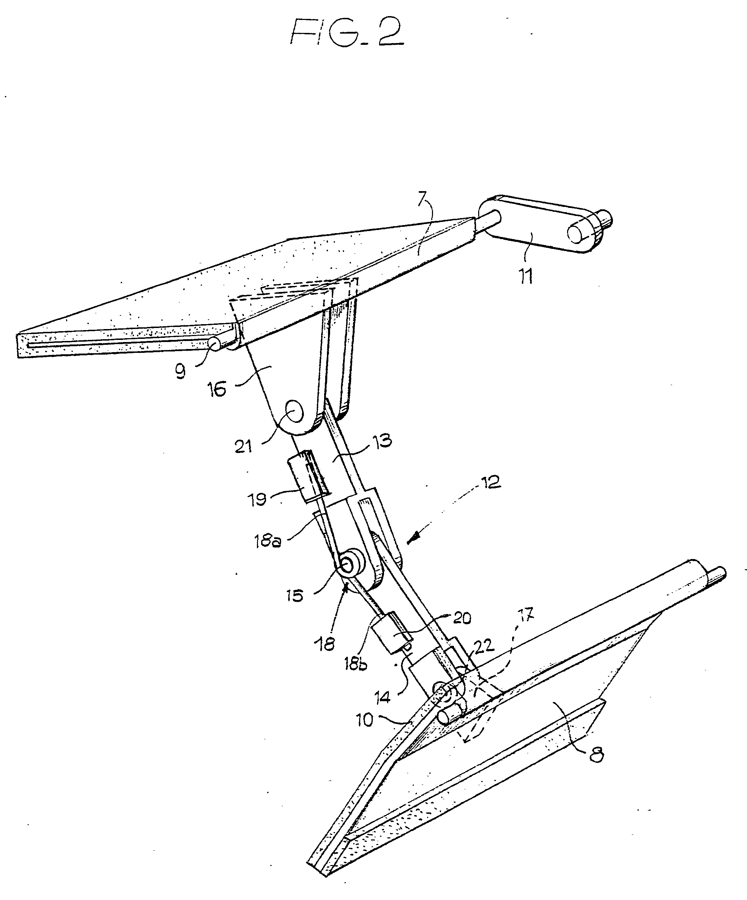

In order to distribute air through the outlets 4 and 6 as well, the actuating member 11 is operated so as to pivot the flap 7. During the first phase of this pivoting, shown in Figure 2, the transmission member 12 is rigid: in fact, the action of the spring 18 prevents the relative pivoting of the arms 13 and 14 until the flap 8 is in its fully-open position. In this configuration, the flap 7 is arranged in a partially-open position so that the air flow which enters by the aperture 3 is divided between the outlets 4, 5 and 6 (Figure 3).

If the actuating member 11 is pivoted beyond this position, the flap 8 remains in its fully-open position and the transmission member 12 is deformed, against the action of the spring 18, and assumes the configuration of Figure 4. In this situation, a greater air flow is obtained through the outlet 4, whilst the air flows through the outlets 5 and 6 are reduced correspondingly.

The movement of the actuating member 11 to its travel-limit position, shown in Figure 5, opens the flap 7 completely while the flap 8 remains in its fully-open position which it had reached previously. In this situation, the transmission member 12 has a substantially-right-angled configuration and the air flow through the intake 3 is directed entirely towards the outlet 4.

When the actuating member 11 is operated in reverse, it returns to the configurations described above: during the final portion of the closing travel of the flap, clearly the flap 8 is closed.

## Claims

1. A device for the simultaneous and differentiated actuation of first and second pivoted distribution flaps associated with respective air ducts of a motor-vehicle air-conditioning unit, in which the flaps are movable between a position in which the respective ducts are fully closed and a position in which they are fully open, and in which the angular amplitude of the travel of the first flap between the two positions is greater than that of the second flap, characterised in that it includes a transmission member (12) which interconnects the two flaps (7, 8), keeping them fixed for pivoting together during the movement of the second flap (8) from its fully-closed position to its fully-open position, and enabling the first flap (7) to effect a further angular movement towards its fully-open position, the second flap (8) being kept stationary in its fully open position.

2. A device according to Claim 1, characterised in that the transmission member is constituted by a resilient toggle (12).

3. A device according to Claim 2, characterised in that the resilient toggle (12) comprises two rods (13, 14) which are articulated to each other at one end and to the first (7) and second (8) flaps respectively at their other ends, the rods (13, 14) being inclined to each other in the position in which the two flaps (7, 8) are fully closed, and resilient means (18) which bias the rods (13, 14) into the inclined position.

4. A device according to Claim 3, characterised in that the resilient means comprise a pin spring (18) which is wound round the mutual articulation (15) of the two rods (13, 14) and whose arms (18a, 18b) react against respective abutments (19, 20) carried by the two rods.

FIG_1

# FIG. 2

FIG_3

EP 0 330 154 A2

FIG_4

FIG. 5